# EUROPÄISCHE PATENTANMELDUNG

(11) **EP 1 386 773 A1**
(43) Veröffentlichungstag der Anmeldung: **04.02.2004**
(21) Anmeldenummer: 02017278.9
(22) Anmeldetag: 01.08.2002
(51) Int. Cl.: B60K 15/03, B29C 45/16

(54) **Gasdichter Kraftstoffbehälter**

(71) Anmelder: Hydro Aluminium Deutschland GmbH, 53117 Bonn (DE)
(72) Erfinder: Häusler, Gerd, 75016 Paris (FR)
(74) Vertreter: COHAUSZ & FLORACK

(57) **Zusammenfassung**

Die Erfindung betrifft einen Kraftstoffbehälter für Kraftfahrzeuge, welcher zumindest teilweise aus Kunststoffverbundmaterial besteht. Die Aufgabe, einen Kraftstoffbehälter für Kraftfahrzeuge, welcher zumindest teilweise aus Kunststoffverbundmaterial besteht, zur Verfügung zu stellen, der die Emission von Kohlenwasserstoffen nahezu vollständig unterdrückt und gleichzeitig einfacher herzustellen ist, wird dadurch gelöst, dass das Kunststoffverbundmaterial (1) zumindest teilweise eine aus mindestens einer Aluminiumfolie (2) gebildete Gasbarriereschicht aufweist.

## Beschreibung

Die Erfindung betrifft einen Kraftstoffbehälter für Kraftfahrzeuge, welcher zumindest teilweise aus Kunststoffverbundmaterial besteht sowie ein Verfahren zur Herstellung eines derartigen Kraftstoffbehälters.

Kraftstoffbehälter für Kraftfahrzeuge werden heutzutage überwiegend aus coextrudiertem Kunststoffverbundmaterial hergestellt. Sie weisen durch die Anpassung an die Bodengruppe der Kraftfahrzeuge häufig eine sehr komplexe Formgebung auf, sodass aus Formgebungsgründen Kraftstoffbehälter aus metallischen Werkstoffen wie beispielsweise Stahl oder Aluminium nicht in Frage kommen. Der Einsatz von Kunststoffverbundmaterial ermöglicht einerseits eine einfache Herstellung auch bei komplexer Formgebung und anderseits, gegenüber Kraftstoffbehältern aus Stahl, ein verringertes Eigengewicht der Kraftstoffbehälter. Zur Herstellung derartiger Kraftstoffbehälter sind bisher im wesentlichen drei verschiedene Verfahren bekannt. Bei dem Blasform-Verfahren werden hohle Blasformrohlinge aus coextrudiertem Kunststoffverbundmaterial in ein formgebendes Blaswerkzeug eingeführt und in diesem zu einem Hohlkörper aufgeblasen. Beim Spritzgieß-Verfahren werden dagegen die verschiedenen Kunststoffe mit hohem Druck in ein von allen Seiten geschlossenes Spritzgießwerkzeug eingespritzt, sodass nach dem Abkühlen Kunststofffertigteile aus Kunststoffverbundmaterial zur Verfügung stehen. Bei dem thermischen Umform-Verfahren hingegen werden eine oder mehrere Kunststofffolien mit Hilfe einer hydraulischen Presse in einem beheizbaren Umformwerkzeug zu einem entsprechenden Kunststofffertigteil aus Kunststoffverbundmaterial umgeformt.

Im Unterschied zum Blasform-Verfahren werden bei dem Spritzgieß-Verfahren sowie bei dem thermischen Umform-Verfahren zunächst den Kraftstoffbehälter formende Kunststofffertigteile, beispielsweise in der Form von Halbschalen, hergestellt, welche zur Herstellung eines Kraftstoffbehälters noch miteinander verbunden bzw. verschweißt werden müssen.

Die nach dem oben beschriebenen Verfahren hergestellten Kraftstoffbehälter für Kraftfahrzeuge aus Kunststoffverbundmaterial weisen allerdings den Nachteil auf, dass sie aufgrund der Verwendung von Kunststoffmaterial permeabel für Kohlenwasserstoffe sind, welche im Kraftstoff enthalten sind. Der Kraftstoffbehälter ist damit eine der Quellen, die zur Emission von Kohlenwasserstoffen durch Kraftfahrzeuge in die Umwelt beitragen.

Um die Permeabilität der Kraftstoffbehälter zu senken, werden heutzutage komplexe 6-Schicht-Coex-Verbundmaterialien eingesetzt, welche von außen nach innen beispielsweise den folgenden Schichtaufbau aufweisen:
1. Schicht: High Density Polyethylen (HDPE)
2. Schicht: Rezyklat aus Verbundmaterial
3. Schicht: Low Density Polyethylen (LDPE)
4. Schicht: Ethylen Vinylalkohol (EVOH)
5. Schicht: Low Density Polyethylen (LDPE)
6. Schicht: High Density Polyethylen (HDPE).

Wobei die innenliegende Schicht zur Erhöhung der Beständigkeit gegenüber den Kraftstoffen meistens zusätzlich behandelt, zumeist fluoriert werden muss.

Zur Reduzierung der Permeation von Kohlenwasserstoffen durch das Kunststoffverbundmaterial dient dabei die zentral angeordnete EVOH-Schicht, die eine hohe Gasbarriereeigenschaft aufweist. Allerdings ist die Gasbarriereeigenschaft der EVOH-Schicht abhängig von der Anwesenheit von Wasserdampf, sodass die EVOH-Schicht in ein eine hohe Wasserdampfbarriere aufweisendes LDPE-HDPE-Schichtsystem eingebettet werden muss.

Kraftstoffbehälter, welche aus diesem komplexen Kunststoffverbundmaterial hergestellt sind, weisen über das Material selber nur noch eine geringe Permeation von Kohlenwasserstoffen auf. Allerdings findet die Permeation von Kohlenwasserstoffen über das Gesamtsystem, d.h. über zusätzliche Einbau- und Anbauteile statt, so dass die Emission von Kohlenwasserstoffen nicht oder nur schlecht verhindert werden kann.

Es wurde daher versucht, über die integrierte Herstellung von Öffnungen und Anschlussleitungen des Kraftstoffbehälters, beispielsweise bereits während des Blasform-Verfahrens, die Emissionswerte zu verringern. Bei der integrierten Herstellung von Öffnungen und Anschlussleitungen werden von einer Seite nach dem Blasform-Vorgang in den noch nicht geschlossenen aber aufgeweiteten Blasformrohling alle Einbauteile eingeführt, bevor der Blasformrohling zu einem Kraftstoffbehälter umgeformt bzw. geschlossen wird.

Zwar konnten die Emissionswerte mit diesem Herstellverfahren weiter gesenkt werden, jedoch ist die Ausschussrate bei diesem Herstellverfahren groß, da die einzelnen Komponenten nicht einzeln auf ihre Dichtheit bezüglich Kohlenwasserstoff geprüft werden können. Bei einem Fehler in einer der Komponenten muss daher bereits ein komplett fertiggestellter Kraftstoffbehälter verschrottet werden.

Ausgehend von dem zuvor beschriebenen Stand der Technik liegt der vorliegenden Erfindung somit die Aufgabe zugrunde, einen Kraftstoffbehälter für Kraftfahrzeuge, welcher zumindest teilweise aus Kunststoffverbundmaterial besteht, zur Verfügung zu stellen, der die Emission von Kohlenwasserstoffen nahezu vollständig unterdrückt und gleichzeitig einfacher herzustellen ist sowie ein einfaches und kostengünstiges Verfahren zur Herstellung derartiger Kraftstoffbehälter für Kraftfahrzeuge vorzuschlagen.

Gemäß einer ersten Lehre der vorliegenden Erfindung wird die oben aufgezeigte und hergeleitete Aufgabe für einen Kraftstoffbehälter für Kraftfahrzeuge dadurch gelöst, dass das Kunststoffverbundmaterial zumindest teilweise eine aus mindestens einer Aluminiumfolie gebildete Gasbarriereschicht aufweist.

Durch diese Maßnahme kann auf den komplexen Aufbau des 6-Schicht-Coex-Verbundmaterials verzichtet werden, da die Aluminiumfolie unabhängig von der Anwesenheit von Wasserdampf hervorragende Gasbarriereeigenschaften aufweist. Es ist daher möglich, Kraftstoffbehälter für Kraftfahrzeuge mit sehr niedrigen Emissionswerten für Kohlenwasserstoffe aus Kunststoffverbundmaterial herzustellen, dessen Schichtsystem einen wesentlich einfacheren Aufbau aufweist.

Die Herstellung eines Kraftstoffbehälter für Kraftfahrzeuge aus Kunststoffverbundmaterial kann dadurch weiter vereinfacht werden, dass, gemäß einer nächsten vorteilhaften Ausführungsform, das Kunststoffverbundmaterial mindestens zwei verschiedene Materialschichten aufweist. Als weitere Materialschichten kommen, neben der als Gasbarriereschicht fungierenden Aluminiumfolie, für das Kunststoffverbundmaterial insbesondere Materialschichten aus HDPE, LDPE, aber auch anderen Kunststoffen in Frage, die zur Herstellung von Kraftstoffbehältern geeignet sind, beispielsweise Polyamid.

Ist als Gasbarriereschicht eine zumindest teilweise einseitig oder beidseitig beschichtete Aluminiumfolie vorgesehen, so kann gemäß einer weiteren vorteilhaft ausgebildeten Ausführungsform des erfindungsgemäßen Kraftstoffbehälters, die Aluminiumfolie auf einfache Weise vor Korrosion geschützt werden. Damit ist es möglich, die Gasbarriereschicht auch innenliegend im Kraftstoffbehälter in direktem Kontakt mit dem Kraftstoff einzusetzen, sodass ein besonders dünner Schichtaufbau des Kunststoffverbundmaterials durch diese Maßnahme realisiert werden kann. Eine beidseitige Beschichtung kann zusätzlich gute Haft- und Verbindungseigenschaften der Aluminiumfolie mit weiteren Materialschichten des Kunststoffverbundmaterials gewährleisten.

Ein besonders guter Korrosionsschutz wird gemäß einer nächsten weitergebildeten Ausführungsform des erfindungsgemäßen Kraftstoffbehälters dadurch erreicht, dass die Aluminiumfolie eine Polyethylen (PE)-Beschichtung aufweist. Die PE-Beschichtung zeichnet sich dabei nicht nur durch eine hohe Barrierewirkung gegenüber Korrosion verursachenden Bestandteilen des Kraftstoffes aus, sondern erweist sich aufgrund der Gleiteigenschaften auch als vorteilhaft bei den zur Herstellung des Kraftstoffbehälters notwendigen Umformprozessen.

Weist die Aluminiumfolie eine Dicke von 10 bis 100 µm auf, so kann gemäß einer nächsten weitergebildeten Ausführungsform des erfindungsgemäßen Kraftstoffbehälters, die Handhabbarkeit der Aluminiumfolie bei der Herstellung des Kraftstoffbehälters in Abhängigkeit von der im Herstellungsprozess der Kraftstoffbehälter benötigten Dehnfähigkeit der Aluminiumfolie eingestellt werden. Dabei sind extrem dünne Aluminiumfolien besonders schwierig zu handhaben, weisen jedoch eine größere Dehnfähigkeit auf als dickere Aluminiumfolien.

Ein besonders vorteilhafter Kompromiss zwischen Handhabbarkeit und Dehnfähigkeit der Aluminiumfolie wird gemäß einer weiteren Ausführungsform des erfindungsgemäßen Kraftstoffbehälters, dadurch erreicht, dass die Aluminiumfolie eine Dicke von 20 bis 30 µm aufweist.

Vorteilhafterweise weist die Aluminiumfolie eine mittlere Dehnung von 15 bis 25 % auf, sodass, gemäß einer nächsten weitergebildeten Ausführungsform des erfindungsgemäßen Kraftstoffbehälters, die Gasbarriereschicht ein vergrößertes Umformpotential aufweist.

Ein besonders einfach aufgebauter Kraftstoffbehälter kann gemäß einer weiteren Ausführungsform zur Verfügung gestellt werden, indem mindestens zwei den Kraftstoffbehälter formende Kunststofffertigteile, insbesondere ein oberes und ein unteres Kunststofffertigteil, vorgesehen sind. Da die Dehnfähigkeit der Aluminiumfolie begrenzt ist, kann das bisher vorwiegend angewendete Blasformverfahren nicht oder nur eingeschränkt zur Herstellung der Kunststofffertigteile eingesetzt werden.

Weisen die Kunststofffertigteile Öffnungen, Einbauteile, insbesondere Anschlussleitungen zum Kraftstoffbehälter und Aufnahmen für Einbauteile auf, so können auf einfache Weise, gemäß einer nächsten Ausführungsform des erfindungsgemäßen Kraftstoffbehälters, die benötigten Öffnungen und Einbauteile in den Kraftstoffbehälter integriert werden und die Emissionswerte von Kohlenwasserstoffen weiter gesenkt werden.

Gemäß einer zweiten Lehre der vorliegenden Erfindung wird die oben hergeleitete und aufgezeigte Aufgabe mit einem Verfahren zur Herstellung eines Kraftstoffbehälters für Kraftfahrzeuge, welcher zumindest teilweise aus Kunststoffverbundmaterial besteht, dadurch gelöst, dass mindestens eine Aluminiumfolie in das Kunststoffverbundmaterial eingebracht wird und aus dem Kunststoffverbundmaterial den Kraftstoffbehälter formende Kunststofffertigteile hergestellt werden.

Mit dem erfindungsgemäßen Verfahren wird ein einfacherer Schichtaufbau des Kunststoffverbundmaterials des Kraftstoffbehälters ermöglicht, da die Aluminiumfolie unabhängig von der Anwesenheit von anderen Stoffen, beispielsweise Wasserdampf, hervorragende Gasbarriereeigenschaften aufweist. Dadurch kann ein aufwendiges Schichtsystem zum Schutz der Gasbarriereschicht entfallen und gleichzeitig niedrige Emissionswerte für Kohlenwasserstoffe erzielt werden.

Eine niedrige Ausschussrate bei der Herstellung von Kraftstoffbehältern kann gemäß einer weitergebildeten Ausführungsform des erfindungsgemäßen Verfahrens dadurch erreicht werden, dass den Kraftstoffbehälter formende Kunststofffertigteile zumindest im wesentlichen gasdicht miteinander verbunden, insbesondere thermisch verschweißt werden.

Werden die Kunststofffertigteile, gemäß einer nächsten weitergebildeten Ausführungsform des erfindungsgemäßen Verfahrens, unter Verwendung des Spritzgieß-Verfahrens mit Hilfe eines Spritzgießwerkzeuges hergestellt, kann eine hohe Präzision der Kunststofffertigteile auch bei einer Massenfertigung gewährleist werden. Ferner können beispielsweise Schwallbleche und Kraftstoffleitungen direkt mitgespritzt und in den Kraftstoffbehälter integriert werden.

Kunststofffertigteile mit einer aus mindestens einer Aluminiumfolie gebildeten Gasbarriereschicht können mit dem erfindungsgemäßen Verfahren besonders einfach hergestellt werden, indem beim Spritzgießen vor dem Einspritzvorgang mindestens eine beschichtete Aluminiumfolie in das Spritzgießwerkzeug eingelegt wird. Durch die Beschichtung der Aluminiumfolie, beispielsweise einer PE-Beschichtung, kann die Aluminiumfolie auch innenliegend im Kraftstoffbehälter als Gasbarriereschicht eingesetzt werden, wobei die Aluminiumfolie über die Beschichtung vor Korrosion durch korrosive Bestandteile des Krafftstoffes geschützt wird. Darüber hinaus dient die Beschichtung als Gleitschicht bei eventuellen Umformprozessen sowie zum Aufbau einer guten Haftung zu anderen Kunststoffschichten des Kunststoffverbundmaterials.

Gemäß einer weiteren Ausführungsform des erfindungsgemäßen Verfahrens können die den Kraftstoffbehälter formenden Kunststofffertigteile besonders einfach dadurch hergestellt werden, dass die Kunststofffertigteile durch thermisches Umformen des Kunststoffverbundmaterials in einem Umformwerkzeug hergestellt werden.

Dabei kann die Herstellung des Kunststoffverbundmaterials in den Umformprozess der Herstellung der Kunststofffertigteile dadurch integriert werden, dass, gemäß einer nächsten weitergebildeten Ausführungsform des erfindungsgemäßen Verfahrens, vor dem Umformprozess mindestens eine beschichtete Aluminiumfolie und mindestens eine Kunststofffolie in das Umformwerkzeug eingelegt wird und die Aluminiumfolie zusammen mit der Kunststofffolie mittels Druck- und Wärmezufuhr umgeformt wird.

Es existieren eine Vielzahl von Möglichkeiten, den erfindungsgemäßen Kraftstoffbehälter für Kraftfahrzeuge bzw. das erfindungsgemäße Verfahren zur Herstellung eines solchen Kraftstoffbehälters auszugestalten und weiterzubilden. Hierzu wird beispielsweise verwiesen einerseits auf die den Patentansprüchen 1 und 9 nachgeordneten Patentansprüche, andererseits auf die Beschreibung eines bevorzugten Ausführungsbeispiels in Verbindung mit der Zeichnung. In der Zeichnung zeigt:
- Fig. 1:: in einer Schnittansicht das Kunststoffverbundmaterials ein Ausführungsbeispiels eines erfindungsgemäßen Kraftstoffbehälters für Kraftfahrzeuge und
- Fig. 2:: in einer Schnittansicht das Ausführungsbeispiel eines erfindungsgemäßen Kraftstoffbehälters.

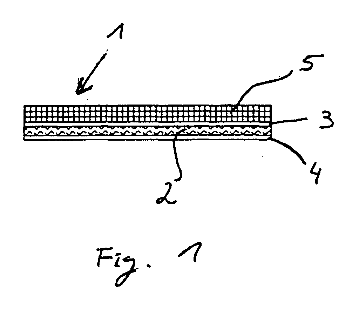

Das in Fig. 1 in einer Schnittansicht dargestellte Kunststoffverbundmaterials 1 eines Ausführungsbeispiel eines erfindungsgemäßen Kraftstoffbehälters weist eine aus einer Aluminiumfolie 2 gebildete Gasbarriereschicht auf. Wie Fig. 1 weiter zeigt, sind beidseitig der Aluminiumfolie 2 die Beschichtungen 3 und 4 vorgesehen, welche beispielsweise aus PE oder anderen zur Beschichtung von Aluminiumfolien geeigneten Kunststoffen bestehen können. Die Beschichtung wird vorzugsweise in einem vorgelagertem Produktionsschritt beispielsweise durch Kaschieren, Laminieren oder Extrusionsbeschichten auf die Aluminiumfolie aufgebracht, sodass die beschichtete Aluminiumfolie 2 als Rohstoff im Herstellungsprozess verwendet werden kann. Die beidseitige Beschichtung 3, 4 kann dabei auch aus verschiedenen Kunststoffen bestehen, wobei die der Kunststoffschicht 5 zugewandten Beschichtung 3 vorzugsweise gute Haft- und Verbindungseigenschaften mit der darüber liegenden Kunststoffschicht 5 aufweist. Dagegen soll die Beschichtung 4 insbesondere bei den formgebenden Verfahren zur Herstellung eines Kraftstoffbehälters 6 die Verarbeitung der Aluminiumfolie 2 vereinfachen und diese vor korrosiven Bestandteilen des Kraftstoffes im Kraftstoffbehälter 6 schützen.

Es ist jedoch auch möglich, auf die Beschichtung der Aluminiumfolie zu verzichten und innenliegend eine blanke Aluminiumschicht zu verwenden, sodass das Verbundmaterial lediglich aus zwei verschiedenen Materialschichten besteht. In diesem Fall ist die Auswahl der in diesem Kraftstoffbehälter verwendbaren Kraftstoffe auf gegenüber Aluminium nicht korrosive Kraftstoffe beschränkt.

Da die Aluminiumfolie 2 bei der bevorzugten verwendeten Dicke vom 20 bis 30 µm undurchlässig für Kohlenwasserstoffe ist, kann die Permeation von Kohlenwasserstoffen aus Kraftstoffbehältern mit Hilfe des erfindungsgemäßen Kunststoffverbundmaterials 1 bei insgesamt einfachem Schichtaufbau stark verringert werden.

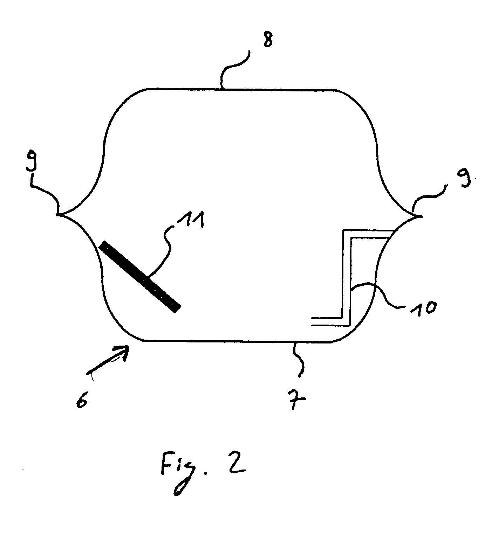

Das in Fig. 2 dargestellte Ausführungsbeispiel eines Kraftstoffbehälters 6 weist die den Kraftstoffbehälter formenden Kunststofffertigteile 7 und 8 aus Kunststoffverbundmaterial 1, eine Kraftstoffleitung 10 sowie ein Schwallblech 11 auf. Wie die Fig. 2 deutlich zeigt, wird der Kraftstoffbehälter 6 dabei aus einem unteren Kunststofffertigteil 7 und einem oberen Kunststofffertigteil 8 gebildet. Die Kunststofffertigteile 7 und 8 können durch präzise formgebende Verfahren, beispielsweise durch das Spritzgieß-Verfahren mit einem Spritzgießwerkzeug oder durch thermisches Umformen in einem Umformwerkzeug, hergestellt werden. Beide Verfahren sind dazu geeignet, bei hoher Präzision große Stückzahlanforderungen zu erfüllen.

Als besonders vorteilhaft erweist sich zudem, dass die so hergestellten Kunststofffertigteile 7 und 8 vor deren Zusammenbau auf Dichtigkeit gegenüber Kohlenwasserstoffen geprüft werden können, so dass eine effektive Qualitätskontrolle bei der Herstellung der Kraftstoffbehälter 6 ermöglicht wird.

Werden die Kunststofffertigteile 7,8 beispielsweise unter Verwendung des Spritzgießverfahrens hergestellt, können bei der Herstellung Einbauteile, beispielsweise die Kraftstoffleitung 10 oder die Schwallwand 11, in einem Verarbeitungsprozess hergestellt und ebenso vor dem Zusammenbau der Kunststofffertigteile 7 und 8 zu einem Kraftstoffbehälter 6 auf Dichtigkeit getestet werden. Beispielsweise kann die Kraftstoffzuleitung 10 mit einem in das Spritzgießverfahren integrierten Gas-Innendruck-Verfahren hergestellt werden, bei dem über das Einblasen von Gas beim Spritzvorgang genau definierte Hohlräume im Kunststofffertigteil 7 erzeugt werden können.

Wie die Fig. 2 weiter zeigt, werden die Kunststofffertigteile 7 und 8 durch eine umlaufende Schweißnaht 9 gasdicht miteinander verschweißt. Das Aufschmelzen und Verkleben des Kunststoffverbundmaterials 1 der Kunststofffertigteile 7 und 8 im Bereich der Schweißnaht 9, bei welchem die Kunststoffbestandteile aufgeschmolzen werden, gewährleistet eine gasdichte und mechanisch stabile Verbindung zwischen den Kunststofffertigteilen 7 und 8. Es ist allerdings auch möglich, andere Verbindungsverfahren, beispielsweise Klebeverfahren, einzusetzen, sofern die notwendige Gasdichtigkeit der Verbindungsnaht 9 zwischen den Kunststofffertigteilen 7 und 8 gewährleistet werden kann.

## Patentansprüche

1. Kraftstoffbehälter für Kraftfahrzeuge, welcher zumindest teilweise aus Kunststoffverbundmaterial besteht,
**dadurch gekennzeichnet, dass** das Kunststoffverbundmaterial (1) zumindest teilweise eine aus mindestens einer Aluminiumfolie (2) gebildete Gasbarriereschicht aufweist.

2. Kraftstoffbehälter nach Anspruch 1
**dadurch gekennzeichnet, dass** das Kunststoffverbundmaterial (1) mindestens zwei verschiedene Materialschichten aufweist.

3. Kraftstoffbehälter nach Anspruch 1 oder 2
**dadurch gekennzeichnet, dass** als Gasbarriereschicht eine zumindest teilweise einseitig oder beidseitig beschichtete Aluminiumfolie (2) vorgesehen ist.

4. Kraftstoffbehälter nach Anspruch 3
**dadurch gekennzeichnet, dass** die Aluminiumfolie (2) eine Polyethylen (PE)-Beschichtung aufweist.

5. Kraftstoffbehälter nach einem der Ansprüche 1 bis 4
**dadurch gekennzeichnet, dass** die Aluminiumfolie (2) eine Dicke von 10 bis 100 µm aufweist.

6. Kraftstoffbehälter nach einem der Ansprüche 1 bis 5
**dadurch gekennzeichnet, dass** die Aluminiumfolie (2) eine Dicke von20 bis 30 µm aufweist.

7. Kraftstoffbehälter nach einem der Ansprüche 1 bis 6
**dadurch gekennzeichnet, dass** die Aluminiumfolie (2) eine mittlere Dehnung von 15 bis 25 % aufweist.

8. Kraftstoffbehälter nach einem der Ansprüche 1 bis 7
**dadurch gekennzeichnet, dass** mindestens zwei den Kraftstoffbehälter (6) formende Kunststofffertigteile (7, 8), insbesondere ein oberes und ein unteres Kunststofffertigteil (7,8), vorgesehen sind.

9. Kraftstoffbehälter nach einem der Ansprüche 1 bis 8
**dadurch gekennzeichnet, dass** die Kunststofffertigteile (7, 8) Öffnungen, Einbauteile, insbesondere Anschlussleitungen zum Kraftstoffbehälter (6) und Aufnahmen für Einbauteile aufweisen.

10. Verfahren zur Herstellung eines Kraftstoffbehälters für Kraftfahrzeuge, welcher zumindest teilweise aus Kunststoffverbundmaterial besteht, insbesondere nach einem der Ansprüche 1 bis 9.
**dadurch gekennzeichnet, dass** mindestens eine Aluminiumfolie in das Kunststoffverbundmaterial eingebracht wird und aus dem Kunststoffverbundmaterial den Kraftstofftank formende Kunststofffertigteile hergestellt werden.

11. Verfahren nach Anspruch 10
**dadurch gekennzeichnet, dass** die Kunststofffertigteile im wesentlichen gasdicht miteinander verbunden, insbesondere thermisch verschweißt, werden.

12. Verfahren nach Anspruch 10 oder 11
**dadurch gekennzeichnet, dass** die Kunststofffertigteile unter Verwendung des Spritzgieß-Verfahrens mit Hilfe eines Spritzgießwerkzeuges hergestellt werden.

13. Verfahren nach Anspruch 12
**dadurch gekennzeichnet, dass** beim Spritzgießen vor dem Einspritzvorgang mindestens eine beschichtete Aluminiumfolie in das Spritzgießwerkzeug eingelegt wird.

14. Verfahren nach Anspruch 10 oder 11
**dadurch gekennzeichnet, dass** die Kunststofffertigteile durch thermisches Umformen eines Kunststoffverbundmaterials in einem Umformwerkzeug hergestellt werden.

15. Verfahren nach Anspruch 14
**dadurch gekennzeichnet, dass**
vor dem Umformprozess mindestens eine beschichtete Aluminiumfolie und mindestens eine Kunststofffolie in das Umformwerkzeug eingelegt wird und die Aluminiumfolie zusammen mit der Kunststofffolie mittels Druck- und Wärmezufuhr umgeformt wird.

## Geänderte Patentansprüche

### Geänderte Patentansprüche gemäss Regel 86(2) EPÜ.

**1.** Kraftstoffbehälter für Kraftfahrzeuge, welcher zumindest teilweise aus Kunststoffverbundmaterial besteht und das Kunststoffverbundmaterial (1) zumindest teilweise eine aus mindestens einer Aluminiumfolie (2) gebildete Gasbarriereschicht aufweist,
**dadurch gekennzeichnet, dass** als Gasbarriereschicht eine zumindest teilweise einseitig oder beidseitig beschichtete Aluminiumfolie (2) vorgesehen ist.

**2.** Kraftstoffbehälter nach Anspruch 1
**dadurch gekennzeichnet, dass** die Aluminiumfolie (2) eine Polyethylen (PE)-Beschichtung aufweist.

**3.** Kraftstoffbehälter nach Anspruch 1 oder 2
**dadurch gekennzeichnet, dass** die Aluminiumfolie (2) eine Dicke von 10 bis 100 µm aufweist.

**4.** Kraftstoffbehälter nach einem der Ansprüche 1 bis 3
**dadurch gekennzeichnet, dass** die Aluminiumfolie (2) eine Dicke von 20 bis 30 µm aufweist.

**5.** Kraftstoffbehälter nach einem der Ansprüche 1 bis 4
**dadurch gekennzeichnet, dass** die Aluminiumfolie (2) eine mittlere Dehnung von 15 bis 25 % aufweist.

**6.** Kraftstoffbehälter nach einem der Ansprüche 1 bis 5
**dadurch gekennzeichnet, dass** mindestens zwei den Kraftstoffbehälter (6) formende Kunststofffertigteile (7, 8), insbesondere ein oberes und ein unteres Kunststofffertigteil (7,8), vorgesehen sind.

**7.** Kraftstoffbehälter nach einem der Ansprüche 1 bis 6
**dadurch gekennzeichnet, dass** die Kunststofffertigteile (7, 8) Öffnungen, Einbauteile, insbesondere Anschlussleitungen zum Kraftstoffbehälter (6) und Aufnahmen für Einbauteile aufweisen.

**8.** Verfahren zur Herstellung eines Kraftstoffbehälters für Kraftfahrzeuge, welcher zumindest teilweise aus Kunststoffverbundmaterial besteht, insbesondere nach einem der Ansprüche 1 bis 7, bei welchem mindestens eine Aluminiumfolie in das Kunststoffverbundmaterial eingebracht wird und aus dem Kunststoffverbundmaterial den Kraftstofftank formende Kunststofffertigteile hergestellt werden
**dadurch gekennzeichnet, dass** eine ein- oder beidseitig beschichtete Aluminiumfolie in das Kunststoffverbundmaterial eingebracht wird.

**9.** Verfahren nach Anspruch 8
**dadurch gekennzeichnet, dass** die Kunststofffertigteile im wesentlichen gasdicht miteinander verbunden, insbesondere thermisch verschweißt, werden.

**10.** Verfahren nach Anspruch 8 oder 9
**dadurch gekennzeichnet, dass** die Kunststofffertigteile unter Verwendung des Spritzgieß-Verfahrens mit Hilfe eines Spritzgießwerkzeuges hergestellt werden.

**11.** Verfahren nach Anspruch 10
**dadurch gekennzeichnet, dass** beim Spritzgießen vor dem Einspritzvorgang die Aluminiumfolie in das Spritzgießwerkzeug eingelegt wird.

**12.** Verfahren nach Anspruch 8 oder 9
**dadurch gekennzeichnet, dass** die Kunststofffertigteile durch thermisches Umformen eines Kunststoffverbundmaterials in einem Umformwerkzeug hergestellt werden.

**13.** Verfahren nach Anspruch 12
**dadurch gekennzeichnet, dass** vor dem Umformprozess mindestens eine beschichtete Aluminiumfolie und mindestens eine Kunststofffolie in das Umformwerkzeug eingelegt wird und die Aluminiumfolie zusammen mit der Kunststofffolie mittels Druck- und Wärmezufuhr umgeformt wird.
